Europäisches Patentamt

(19) European Patent Office

Office européen des brevets

(11) EP 0 679 875 B1

(12) FASCICULE DE BREVET EUROPEEN

(45) Date de publication et mention
de la délivrance du brevet:
**26.03.2003 Bulletin 2003/13**

(51) Int Cl.⁷: **G01F 23/00**

(21) Numéro de dépôt: **95400917.1**

(22) Date de dépôt: **25.04.1995**

(54) **Capteur de niveau de liquide à noyau plongeur**

Flüssigkeitsfüllstandsmesser mit einem eintauchbaren Fühlkörper

Liquid level detector with an immersible probe

(84) Etats contractants désignés:
**AT BE CH DE DK ES GB GR IE IT LI LU MC NL PT SE**

(30) Priorité: **26.04.1994 FR 9404993**

(43) Date de publication de la demande:
**02.11.1995 Bulletin 1995/44**

(73) Titulaire: **AUXITROL S.A.**
**18941 Bourges Cédex 9 (FR)**

(72) Inventeur: **Legras, Olivier**
**18000 Asnieres les Bourges (FR)**

(74) Mandataire: **Thévenet, Jean-Bruno et al**
**Cabinet Beau de Loménie**
**158, rue de l'Université**
**75340 Paris Cédex 07 (FR)**

(56) Documents cités:
**EP-A- 0 355 038      EP-A- 0 409 732**
**DE-A- 2 743 862      FR-A- 2 650 073**
**US-A- 3 825 025**

**Description**

La présente invention a pour objet un capteur de niveau de liquide à noyau plongeur, comprenant un noyau plongeur muni de moyens de détection de la présence de liquide et un câble ou ruban gradué qui est enroulable sur un support disposé à l'extérieur du récipient contenant le liquide dont le niveau est à détecter, et dont l'extrémité libre est fixée au boîtier du noyau plongeur, lequel boîtier incorpore une source d'alimentation électrique autonome, des circuits électroniques de traitement et une sonde de détection de la présence de liquide.

On connaît déjà des capteurs de niveau de liquide à noyau plongeur de ce type, dans lesquels un ruban métallique souple gradué, enroulable dans un boîtier de stockage étanche extérieur à un réservoir, pénètre dans le réservoir à travers un passage muni de moyens d'étanchéité par rapport à l'environnement externe. L'extrémité libre du ruban est fixée à un noyau plongeur muni d'une touche de détection de la présence de liquide et de moyens d'émission d'un signal d'information vers un récepteur situé hors du réservoir et muni par exemple d'un voyant qui s'allume lorsque la touche de détection entre en contact avec un liquide. Le déroulement du ruban gradué est ainsi commandé par l'opérateur jusqu'à ce que celui-ci constate que le voyant est dans une zone à la limite de l'allumage et de l'extinction, ce qui signifie que la touche de détection du noyau plongeur est située au niveau de l'interface entre une atmosphère gazeuse et le liquide. Lorsque le voyant signale que la touche de détection est arrivée au niveau de l'interface qui est à repérer, l'opérateur note la graduation du ruban qui est située en regard d'un repère formé sur une fenêtre d'observation, laquelle graduation fournit une indication de la position de l'interface à contrôler, c'est-à-dire du niveau du liquide dans le réservoir.

En pratique, dans le domaine industriel, des capteurs de niveau de liquide à noyau plongeur sont utilisés pour détecter des liquides de types très différents dont certains peuvent être très agressifs sur le plan chimique. Actuellement, chaque capteur est adapté à un liquide d'une certaine nature et n'a pas de caractère universel. Ainsi, pour certains types de liquides, on utilise une touche de détection réagissant à des variations de conductivité, pour d'autres types de liquides, on utilise une touche de détection de type capacitif, pour encore d'autres liquides de nature différente, on utilise une touche de détection de type optique. De plus, ces détecteurs de type optique ou capacitif présentent une certaine fragilité et restent d'une utilisation délicate.

On connaît par ailleurs des détecteurs de présence de liquide du type à guide d'ondes élastiques. Ces détecteurs sont toutefois généralement assez encombrants, d'une sensibilité limitée et sont montés à poste fixe sur la paroi du réservoir contenant le liquide.

Il existe ainsi un besoin de réaliser un capteur de niveau de liquide à noyau plongeur qui à la fois présente une sensibilité et une fiabilité suffisantes et puisse être réalisé dans de petites dimensions, l'ensemble des éléments actifs du capteur étant incorporés dans le noyau plongeur.

Ces buts sont atteints conformément à l'invention, grâce à un capteur de niveau de liquide à noyau plongeur, comprenant un noyau plongeur muni de moyens de détection de la présence de liquide et un câble ou ruban gradué qui est enroulable sur un support disposé à l'extérieur du récipient contenant le liquide dont le niveau est à détecter, et dont l'extrémité libre est fixée au boîtier du noyau plongeur, lequel boîtier incorpore une source d'alimentation électrique autonome, des circuits électroniques de traitement et une sonde de détection de la présence de liquide, caractérisé en ce que la sonde de détection de la présence de liquide comprend un guide métallique présentant successivement une première partie supérieure cylindrique pleine, une deuxième partie de section réduite constituant un amplificateur mécanique, une troisième partie tronconique dont la grande base est située vers le bas et une quatrième partie inférieure cylindrique d'extrémité constituant la partie sensible de la sonde, en ce que le guide métallique est relié au boîtier du noyau plongeur de façon étanche par l'intermédiaire d'une bride de support qui est fixée sur le guide métallique dans une zone linéaire annulaire située au niveau de ladite troisième partie tronconique de telle sorte que seule la portion du guide située en dessous de ladite zone linéaire annulaire émerge du boîtier du noyau plongeur et puisse être en contact avec un liquide, en ce qu'un transducteur alimenté en énergie électrique à partir des circuits électroniques de traitement est disposé à l'extrémité libre de la première partie supérieure, et en ce que les circuits électroniques de traitement comprennent des circuits de production d'impulsions d'excitation de fréquence prédéterminée fi appliquées périodiquement au transducteur pour créer des ondes élastiques incidentes dans le guide et des circuits de détection des impulsions délivrées par le transducteur en écho aux ondes élastiques incidentes en l'absence de liquide en contact avec la partie cylindrique sensible d'extrémité du guide.

Selon un mode particulier de réalisation, la partie cylindrique d'extrémité du guide est réalisée sous une forme tubulaire et présente une extrémité libre obturée par un bouchon empêchant la pénétration de liquide à l'intérieur de ladite partie cylindrique d'extrémité.

Selon une caractéristique particulière, la bride de support est fixée sur le guide métallique dans une zone linéaire annulaire par soudage au laser ou soudage par faisceau d'électrons.

D'une manière générale, le capteur selon l'invention présente une partie sensible très dispersive avec une vitesse de groupe faible et un retard important pour les trains d'ondes élastiques se propageant dans la partie sensible du guide.

L'invention permet en particulier de réaliser une sonde très courte présentant une grande sensibilité, inférieure à 1 mm, tout en autorisant l'utilisation de transducteurs pouvant être constitués à partir de céramiques piézoélectriques de taille normale.

Selon un mode particulier de réalisation, la deuxième partie de section réduite constituant un amplificateur mécanique comprend un premier tronçon tronconique allongé plein dont la grande base est raccordée à la première partie supérieure cylindrique pleine, et un deuxième tronçon cylindrique de section réduite rattaché à la petite base de la troisième partie tronconique.

Dans ce cas, selon un mode de réalisation plus particulier, qui facilite la fabrication, le deuxième tronçon cylindrique de section réduite comprend une première portion qui est formée d'une seule pièce avec la première partie supérieure pleine et le premier tronçon tronconique allongé, et une deuxième portion qui est formée d'une seule pièce avec la troisième partie tronconique et la partie inférieure cylindrique d'extrémité.

Selon une réalisation particulière, la bride de support du guide métallique est tubulaire et comprend une gorge extérieure dans laquelle est disposé un joint torique.

Avantageusement, la première partie supérieure cylindrique pleine et la quatrième partie inférieure cylindrique d'extrémité présentent le même diamètre extérieur.

De préférence, la valeur de la fréquence prédéterminée fi, exprimée en Hertz est choisie en fonction du diamètre extérieur $\phi$ext et du diamètre intérieur $\phi$ int, exprimés en mètres, de la partie inférieure cylindrique tubulaire d'extrémité et de la vitesse $V_T$ des ondes transversales dans le matériau, exprimée en m/s, à partir de la formule suivante :

$$fi = V_T \times \frac{\phi ext - 0,6\ \phi int}{(\phi ext)^2}$$

La fréquence prédéterminée fi est comprise entre environ 100 kHz et 600 kHz.

La longueur totale du guide métallique est comprise entre 60 et 120 mm.

La longueur de la partie cylindrique tubulaire d'extrémité est comprise entre 5 et 30 mm.

Le diamètre extérieur $\phi$ext de la partie cylindrique tubulaire d'extrémité est compris entre 5 et 15 mm.

Le diamètre intérieur $\phi$int de la partie cylindrique tubulaire d'extrémité est compris entre 2 et 12 mm.

La partie cylindrique tubulaire d'extrémité présente une paroi dont l'épaisseur est comprise entre 2 et 20 dixièmes de millimètre.

Ledit deuxième tronçon cylindrique de section réduite présente un diamètre compris entre 0,5 et 5 mm.

Le capteur selon l'invention peut en outre comprendre un capteur de température disposé à l'intérieur du boîtier du noyau plongeur.

D'autres caractéristiques et avantages de l'invention ressortiront de la description suivante de modes particuliers de réalisation, donnés à titre d'exemples non limitatifs en référence aux dessins annexés, sur lesquels :

- la figure 1 est une vue d'ensemble en coupe verticale d'un capteur de niveau de liquide à noyau plongeur auquel est applicable l'invention,
- la figure 2 est une vue en coupe axiale d'un exemple de noyau plongeur de capteur de niveau de liquide réalisé selon l'invention,
- les figures 3 et 4 sont des vues respectivement en élévation et en coupe axiale d'un guide métallique et de son support réalisés de façon à être incorporés dans un noyau plongeur conformément à l'invention,
- la figure 5 est une vue de détail en coupe axiale, montrant la liaison entre un guide métallique et sa bride de support, et
- la figure 6 est un schéma bloc montrant les éléments constitutifs essentiels des circuits électroniques incorporés dans un noyau plongeur de capteur conforme à l'invention.

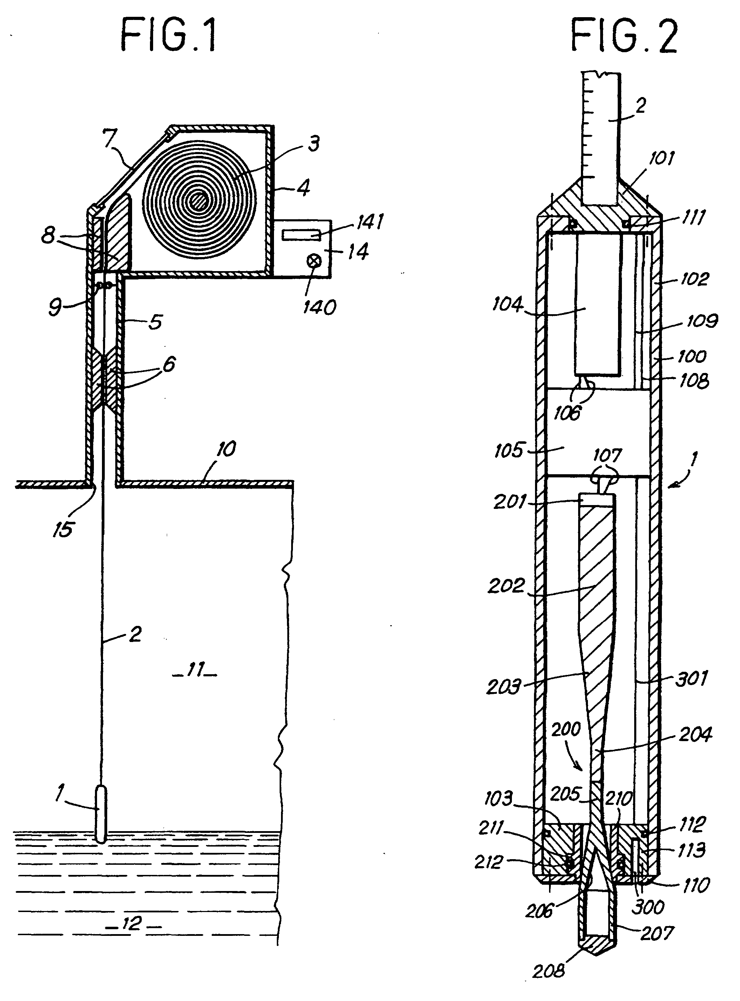

La figure 1 montre un exemple de capteur de niveau de liquide à noyau plongeur auquel est applicable l'invention. Un tel type de capteur de niveau comprend un noyau plongeur 1 qui est introduit par une ouverture 15 dans un réservoir 10 contenant un liquide 12 dont on veut déterminer le niveau, lequel liquide 12 est surmonté d'une atmosphère gazeuse 11. A titre d'exemple, le liquide 12 peut être de l'eau, un produit pétrolier ou tout autre type de liquide même chimiquement très agressif.

Le noyau plongeur 1, dont l'extrémité inférieure constitue l'élément sensible, est rattaché par son extrémité supérieure à un câble ou un ruban gradué 2 qui peut s'enrouler en spirale 3 dans un boîtier 4 placé à l'extérieur du réservoir 10. Le boîtier 4 définit un espace interne étanche qui est en communication par un canal 5 avec l'ouverture 15 formée dans le réservoir 10. Le câble ou ruban gradué 2 portant à son extrémité libre le noyau plongeur 1 passe à travers l'ouverture 15 dans le canal 5 où peuvent être disposés des moyens 6, 8 de guidage du câble ou ruban gradué 2, ainsi que des moyens 9 de nettoyage du câble ou ruban 2 avant que celui-ci pénètre dans le boîtier de stockage 4. Une fenêtre de mesure 7 munie d'un repère permet de lire à tout instant la graduation du ruban 2 situé en regard de cette fenêtre, laquelle graduation permet de déterminer la longueur du câble ou ruban 2 situé entre la fenêtre 7 et le noyau plongeur 1 placé dans le réservoir 10, et par suite de déterminer le niveau du liquide 13 dans le réservoir 10.

Pour permettre de déterminer le niveau du liquide 12 dans le réservoir 10, le noyau plongeur 1 est équipé de moyens d'émission d'un signal d'information vers un récepteur 14 situé hors du réservoir 10 et disposé par exemple à côté du boîtier 14. Ces moyens d'émission sont connus en eux-mêmes et peuvent être par exemple constitués par un système de transmission par ondes électromagnétiques. Le récepteur 14 peut comprendre par exemple un moyen de signalisation constitué par un voyant 140 qui est activé lorsque la touche sensible située à la partie inférieure du noyau plongeur 1 entre en contact avec le liquide 12. Le récepteur 14 peut encore être muni de tout autre type d'organe d'affichage, tel qu'un écran 141.

On décrira maintenant en détail un exemple de réalisation de l'invention, en référence aux figures 2 à 6.

Sur la figure 2, on voit que le noyau plongeur 1 comprend un boîtier 100 avec un corps de boîtier 102 muni à sa partie supérieure d'un couvercle 101 auquel est rattachée l'extrémité libre d'un ruban gradué 2. Ce couvercle 101 est muni d'un joint d'étanchéité 111 et permet notamment l'introduction de piles ou batteries d'accumulateur 104 dans un compartiment situé à la partie supérieure du noyau plongeur 1.

Le noyau plongeur 1 comprend en outre une plaquette ou un compartiment comportant des circuits électroniques 105 alimentés par des fils de connexion 106 à partir de la pile ou batterie 104. Les circuits électroniques 105 sont eux-mêmes reliés par des fils de connexion 107 avec l'élément excitateur 201 de la sonde 200 de détection de liquide située dans la partie inférieure du boîtier 100 du noyau plongeur 1.

Conformément à l'invention, la sonde 200 de détection de présence de liquide est du type à guide d'ondes élastiques et porte à sa partie supérieure un transducteur 201, par exemple de type céramique piézoélectrique, qui constitue l'élément excitateur relié aux circuits électroniques 105. Le guide métallique émerge de la partie inférieure du boîtier 100 par une partie d'extrémité 207 qui constitue la partie sensible susceptible de venir en contact avec le liquide 12.

Le guide métallique de la sonde 200 est axisymétrique et comprend une partie supérieure cylindrique pleine 202 dont le diamètre est suffisamment important pour recevoir un transducteur 201 de taille normale. La partie supérieure cylindrique 202 peut ainsi présenter par exemple un diamètre D compris entre 7 et 15 mm, typiquement égal à 10 mm.

Le guide métallique, pour permettre l'injection d'une énergie accrue, tout en coopérant avec un transducteur 201 de taille normale, comprend un amplificateur mécanique 203, 204, 205 qui prolonge vers le bas la partie supérieure cylindrique pleine 202. De façon plus particulière, cet amplificateur mécanique comprend un tronçon tronconique allongé 203 plein dont la grande base est raccordée à la partie supérieure cylindrique 202 et un tronçon cylindrique 204, 205 de section réduite qui prolonge vers le bas le tronçon tronconique 203, et est lui-même prolongé vers le bas par une partie tronconique 206 dont la grande base est située vers le bas.

Une partie inférieure cylindrique d'extrémité 207 constituant la partie sensible de la sonde prolonge vers le bas la grande base de la partie tronconique 206. Cette partie cylindrique d'extrémité 207 doit être très dispersive et pour cela est réalisée sous une forme tubulaire. L'extrémité libre de cette partie cylindrique d'extrémité 207 est obturée par un bouchon 208 qui empêche la pénétration du liquide à l'intérieur de cette partie d'extrémité 207 et évite des problèmes de colmatage par des particules ou déchets pouvant être en suspension dans le liquide.

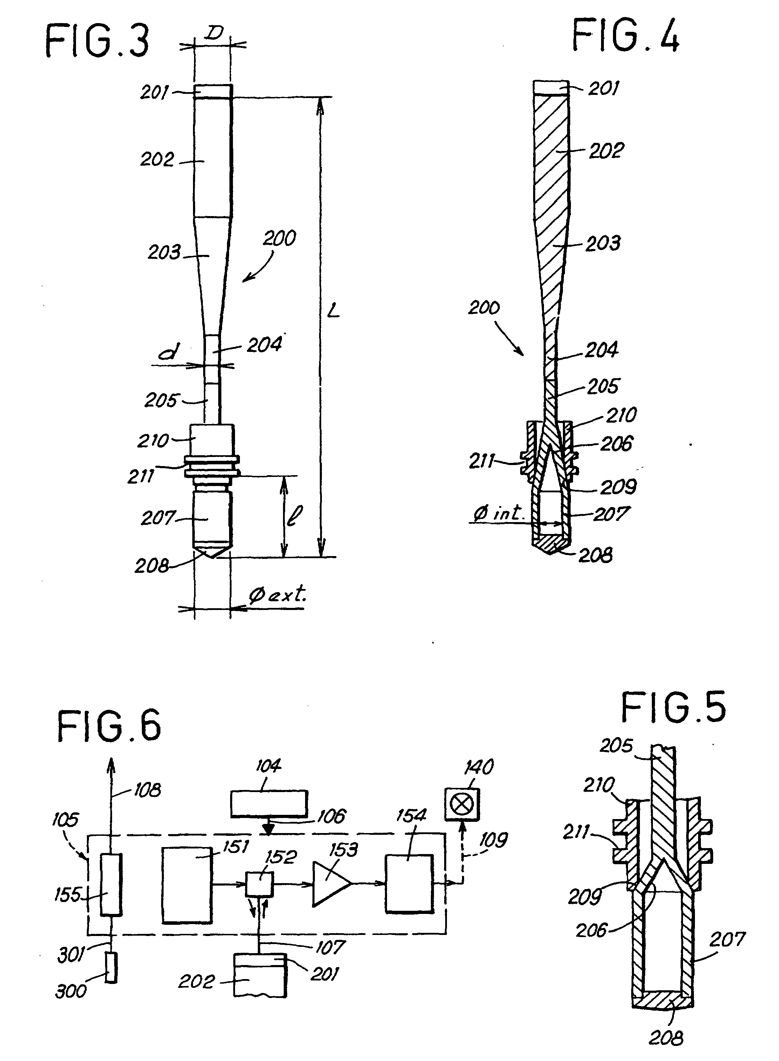

Comme on peut le voir sur les figures 2 et 4, le guide métallique comprend avantageusement une première pièce supérieure pleine réalisée par usinage et comprenant la partie cylindrique supérieure 202, le tronçon tronconique allongé 203 et une partie supérieure 204 du tronçon cylindrique de section réduite, et une deuxième pièce tubulaire qui définit à sa partie inférieure la partie tubulaire d'extrémité 207 et a été rétreinte à sa partie supérieure pour définir la partie tronconique 206 et une partie inférieure 205 du tronçon cylindrique de section réduite. La liaison entre les parties 204 et 205 peut être effectuée par soudage et n'affecte pas la transmission des ondes élastiques dans la mesure où cette liaison est effectuée dans une partie de faible section éloignée des parties tronconiques 203 et 206.

Le tronçon cylindrique 204, 205 de section réduite peut présenter un diamètre d de l'ordre de 0,5 à 5 mm.

La longueur totale L du guide métallique peut être très réduite et être comprise entre environ 60 et 120 mm, ce qui permet une intégration dans un noyau plongeur 1 de petites dimensions, dont la hauteur totale peut rester inférieure à environ 200 mm.

La partie tubulaire d'extrémité 207, qui constitue la partie sensible émergeant du boîtier 100 et pouvant venir au contact du liquide peut présenter une longueur comprise entre 5 et 30 mm, un diamètre extérieur $\phi$ext compris entre environ 5 et 15 mm et un diamètre intérieur $\phi$int compris entre environ 2 et 12 mm. La paroi de la partie tubulaire d'extrémité 207 peut présenter une épaisseur comprise entre 0,2 et 2 mm.

A titre d'exemple, pour un guide métallique présentant une longueur totale L de 110 mm, la partie cylindrique tubulaire d'extrémité 207 peut présenter une longueur de 19 mm, un diamètre extérieur $\phi$ext de 8 mm et un diamètre intérieur $\phi$int de 6,5 mm.

Le diamètre extérieur $\phi$ext de la partie tubulaire d'extrémité 207 peut être égal au diamètre extérieur D de la partie supérieure cylindrique pleine comme cela est représenté sur le dessin, mais ceci n'est pas une obligation.

Le guide métallique peut être réalisé en différents métaux ou alliages tel que le laiton par exemple. Toutefois, une réalisation en acier inoxydable est bien adaptée à la plupart des applications.

Selon une caractéristique importante de l'invention, le guide métallique est relié au boîtier 100 par l'intermédiaire d'une bride de support 210 qui est fixée sur le guide métallique dans une zone annulaire 209 qui, contrairement au montage traditionnel des guides à ondes élastiques, n'est pas située au niveau de la partie supérieure 202 ou même de l'amplificateur mécanique 203, 204, 205, mais au niveau de la partie tronconique de liaison 206, soit dans une partie centrale de celle-ci, soit même dans une partie qui peut être située à la limite de la partie sensible cylindrique inférieure 207 comme représenté sur la figure 5.

La bride de support 210 est avantageusement fixée sur la partie tronconique 206 par soudage au laser ou soudage par faisceau d'électrons, ces procédés garantissant la réalisation d'une liaison à la fois étanche et linéaire qui permet de conserver à la partie d'extrémité 207 toute sa sensibilité et permet au support de ne pas influencer les ondes élastiques transmises par le guide, et par suite d'obtenir une très bonne répétabilité du signal.

La bride de support 210 est tubulaire et présente une gorge annulaire extérieure 211 dans laquelle est placé un joint torique 212. La bride de support 210 peut être immobilisée dans le boîtier 100, par exemple dans un bouchon d'extrémité 113, 110 muni d'un joint d'étanchéité 112 et rapporté par l'extrémité inférieure de la paroi latérale 102 du boîtier 100.

Les circuits électroniques de traitement 105 alimentés par la source d'énergie électrique 104 et servant à exciter le transducteur 201 sont d'un type connu et sont représentés sous la forme d'un schéma-bloc sur la figure 6.

Les circuits 105 comprennent essentiellement un générateur de trains d'ondes 151 qui sont appliqués par l'intermédiaire de portes logiques 152 par une ligne 107 au transducteur 201, ce qui provoque l'émission d'ondes élastiques qui sont transmises le long du guide métallique jusqu'à son extrémité libre inférieure 207, 208.

Lorsque l'extrémité libre 207 n'est pas en contact avec un liquide, le train d'ondes émis par le générateur 151 est réfléchi à l'extrémité 208 du guide et provoque l'apparition d'un écho à l'extrémité de la partie supérieure 202, lequel écho est appliqué au transducteur 201 et transmis sous la forme d'un signal électrique par les portes logiques 152 vers des circuits de traitement comprenant un amplificateur 153 et un organe de détection de seuil 154 qui est associé à des moyens d'émission d'un signal d'information vers un récepteur tel que le récepteur 14 de la figure 1 qui est équipé d'un voyant 140.

En revanche, lorsque l'extrémité libre 207 vient en contact avec un liquide, l'écho engendré par l'extrémité inférieure 208 du guide disparaît ou est fortement atténué. De la sorte, le circuit de détection de seuil 154 décèle la disparition de l'écho et provoque un changement dans le signal émis vers le récepteur 14 équipé de moyens de signalisation 140. Le voyant 140 peut être connecté de manière à être éclairé lorsque la partie 207, 208 du guide est en contact avec le liquide 12 et éteint lorsque la partie 207,208 du guide est dans une atmosphère gazeuse, ou à l'inverse, le voyant 140 peut être connecté de manière à être éclairé lorsque le noyau plongeur 1 est dans une atmosphère gazeuse et s'éteindre lorsque la partie 207, 208 du guide vient en contact avec le liquide 12.

Dans le cadre de la présente invention, il est réalisé une sonde 200 dont la partie sensible 207, 208 présente des dimensions faibles permettant d'obtenir une sensibilité par exemple de l'ordre de 1 mm dans la détection du niveau d'un liquide.

Les dimensions de la partie d'extrémité 207 sont choisies de manière à rendre celle-ci très dispersive, afin de pouvoir réaliser une discrimination des signaux en écho permettant d'obtenir une sensibilité de l'ordre du millimètre. Ceci se traduit par une vitesse de groupe des ondes élastiques très faible et par conséquent par un retard important.

D'une manière générale, la fréquence fi des trains d'onde d'excitation appliqués périodiquement au transducteur 201 par les circuits 151, 152, est choisie de manière que les trains d'ondes élastiques se propagent dans l'amplificateur mécanique du guide à la vitesse de groupe des ondes de basse fréquence et dans la partie tubulaire d'extrémité 207 à la vitesse de groupe minimale correspondant au point d'inflexion de la courbe de la vitesse de phase en fonction de la fréquence.

La fréquence fi peut être comprise entre 100 kHz et 600 kHz.

La valeur de la fréquence fi, exprimé en Hertz, est choisie en fonction du diamètre extérieur $\phi$ext et du diamètre intérieur $\phi$int, exprimés en mètres, de la partie inférieure cylindrique tubulaire d'extrémité 207 et de la vitesse $V_T$ des ondes transversales dans le matériau, exprimée en m/s, à partir de la formule suivante :

$$fi = V_T \times \frac{\phi\text{ext} - 0,6\phi\text{int}}{(\phi\text{ext})^2}$$

Lorsque la partie tubulaire d'extrémité 207 présente un rapport entre l'épaisseur de paroi et le rayon moyen a qui est inférieur à 0,3, la fréquence fi exprimée en Hertz, peut être obtenue à partir du rayon moyen a de cette partie tubulaire, exprimé en mètres, et de la vitesse $V_T$ des ondes transversales dans le matériau de cette partie tubulaire, exprimée en m/s, à partir de la formule suivante :

$$fi = \frac{1,7 \times V_T}{2\pi} \times \frac{1}{a}$$

avec

$$a = \frac{\phi\text{ext.} + \phi\text{int.}}{4}$$

Dans le cas d'une partie tubulaire d'extrémité 207 réalisée en acier inoxydable, la valeur de la vitesse des ondes transversales dans le matériau V$_T$ peut être prise égale à 3150 m/s.

On notera que le noyau plongeur 1 du capteur de niveau selon l'invention peut être réalisé d'une façon entièrement étanche, l'ensemble des piles 104 et circuits électroniques 105 étant incorporés à l'intérieur du boîtier 100, duquel émerge simplement la partie sensible 207 du guide d'ondes élastiques. Les informations fournies sur les lignes 108, 109 par les circuits électroniques 105 peuvent être transmises vers la station de réception 14 située hors du réservoir 10 par tout moyen connu comme une transmission par ondes radioélectriques, ou encore une liaison par câble électrique étanche rendu solidaire du câble ou ruban gradué 2.

Le noyau plongeur 1 prévu pour pouvoir être plongé intégralement dans le liquide 12 peut être équipé de capteurs supplémentaires de type connu. Ainsi, le noyau plongeur 1 peut être équipé d'une sonde de température 300 reliée par des liaisons 301 à un circuit de traitement 155 incorporé dans les circuits électroniques 105 (figures 2 et 6) et pouvant délivrer des informations de température par les lignes 108, 109 lorsque le noyau plongeur est placé dans différentes positions au sein du réservoir 10. Les informations de température peuvent être affichées par exemple sur l'écran 141 du récepteur 14.

Le noyau plongeur 1 peut encore être équipé d'un détecteur de conductivité de type connu, et non représenté sur les dessins, capable de détecter la présence de liquides différents à partir de la mise en évidence de conductivités différentes. Un noyau plongeur 1 équipé d'un tel détecteur de conductivité peut ainsi détecter par exemple la présence d'eau au fond d'un réservoir 10 contenant des hydrocarbures.

Le capteur de niveau selon l'invention permet ainsi, grâce à la robustesse, la sensibilité, la fiabilité et la miniaturisation du noyau plongeur étanche immergeable, de détecter avec une haute précision le niveau d'un liquide dans un réservoir et cela d'une façon universelle, le même capteur pouvant être utilisé avec des liquides les plus divers, tout en autorisant d'autres mesures annexes classiques comme des mesures de température ou de conductivité.

**Revendications**

1. Capteur de niveau de liquide à noyau plongeur, comprenant un noyau plongeur (1) muni de moyens de détection de la présence de liquide et un câble ou ruban gradué (2) qui est enroulable sur un support (4) disposé à l'extérieur du récipient contenant le liquide dont le niveau est à détecter, et dont l'extrémité libre est fixée au boîtier (100) du noyau plongeur (1), lequel boîtier (100) incorpore une source d'alimentation électrique autonome (104), des circuits électroniques de traitement (105) et une sonde (200) de détection de la présence de liquide, **caractérisé en ce que** la sonde (200) de détection de la présence de liquide comprend un guide métallique présentant successivement uue première partie supérieure (202) cylindrique pleine, une deuxième partie (203,204,205) de section' réduite constituant un amplificateur mécanique, une troisième partie tronconique (206) dont la grande base est située vers le bas et une quatrième partie inférieure cylindrique d'extrémité (207) constituant la partie sensible de la sonde, **en ce que** le guide métallique est relié au boîtier (100) du noyau plongeur (1) de façon étanche par l'intermédiaire d'une bride de support (210) qui est fixée sur le guide métallique dans une zone linéaire annulaire (209) située au niveau de ladite troisième partie tronconique (206) de telle sorte que seule la portion du guide située en dessous de ladite zone linéaire annulaire émerge du boîtier (100) du noyau plongeur (1) et puisse être en contact avec un liquide, **en ce qu'**un transducteur (201) alimenté en énergie électrique à partir des circuits électroniques de traitement (105) est disposé à l'extrémité libre de la première partie supérieure (202), et **en ce que** les circuits électroniques de traitement comprennent des circuits (151) de production d'impulsions d'excitation de fréquence prédéterminée fi appliquées périodiquement au transducteur (201) pour créer des ondes élastiques incidentes dans le guide et des circuits (153, 154) de détection des impulsions délivrées par le transducteur (201) en écho aux ondes élastiques incidentes en l'absence de liquide en contact avec la partie cylindrique sensible d'extrémité (207) du guide.

2. Capteur selon la revendication 1, **caractérisé en ce que** la partie cylindrique d'extrémité (207) du guide est réalisée sous une forme tubulaire et présente une extrémité libre obturée par un bouchon (208) empêchant la pénétration de liquide à l'intérieur de ladite partie cylindrique d'extrémité (207).

3. Capteur selon la revendication 1 ou 2, **caractérisé en ce que** la bride de support (210) est fixée sur le guide métallique dans une zone linéaire annulaire (209) par soudage au laser ou soudage par faisceau d'électrons.

4. Capteur selon l'une quelconque des revendications 1 à 3, **caractérisé en ce que** la deuxième partie de section réduite constituant un amplificateur mécanique comprend un premier tronçon tronconique allongé (203) plein dont la grande base est raccordée à la première partie supérieure (202) cylindrique pleine, et un deuxième tronçon cylindrique (204, 205) de section réduite rattaché à la petite base de la troisième partie tronconique (206).

**5.** Capteur selon la revendication 4, **caractérisé en ce que** le deuxième tronçon cylindrique (204, 205) de section réduite comprend une première portion (204) qui est formée d'une seule pièce avec la première partie supérieure pleine (202) et le premier tronçon tronconique allongé (203), et une deuxième portion (205) qui est formée d'une seule pièce avec la troisième partie tronconique (206) et la partie inférieure cylindrique d'extrémité (207).

**6.** Capteur selon l'une quelconque des revendications 1 à 5, **caractérisé en ce que** la bride (210) de support du guide métallique est tubulaire et comprend une gorge extérieure (211) dans laquelle est disposé un joint torique.

**7.** Capteur selon l'une quelconque des revendications 1 à 6, **caractérisé en ce que** la première partie supérieure (202) cylindrique pleine et la quatrième partie inférieure cylindrique d'extrémité (207) présentent le même diamètre extérieur.

**8.** Capteur selon l'une quelconque des revendications 1 à 7, **caractérisé en ce que** le guide métallique est réalisé en acier inoxydable.

**9.** Capteur selon l'une quelconque des revendications 1 à 8, **caractérisé en ce que** la valeur de la fréquence prédéterminée fi, exprimée en Hertz, est choisie en fonction du diamètre extérieur $\phi$ext et du diamètre intérieur $\phi$int, exprimés en mètres, de la partie inférieure cylindrique tubulaire d'extrémité (207) et de la vitesse $V_T$ des ondes transversales dans le matériau, exprimée en m/s, à partir de la formule suivante

$$fi = V_T \times \frac{\phi ext - 0,6\phi int}{(\phi ext)^2}$$

**10.** Capteur selon l'une quelconque des revendications 1 à 9, **caractérisé en ce que** la fréquence prédéterminée fi est comprise entre environ 100 kHz et 600 kHz.

**11.** Capteur selon l'une quelconque des revendications 1 à 10, **caractérisé en ce que** la longueur totale du guide métallique est comprise entre 60 et 120 mm.

**12.** Capteur selon l'une quelconque des revendications 1 à 11, **caractérisé en ce que** la longueur de la partie cylindrique tubulaire d'extrémité (207) est comprise entre 5 et 30 mm.

**13.** Capteur selon l'une quelconque des revendications 1 à 12, **caractérisé en ce que** le diamètre extérieur $\phi$ext de la partie cylindrique tubulaire d'extrémité (207) est compris entre 5 et 15 mm.

**14.** Capteur selon l'une quelconque des revendications 1 à 13, **caractérisé en ce que** le diamètre intérieur $\phi$int de la partie cylindrique tubulaire d'extrémité (207) est compris entre 2 et 12 mm.

**15.** Capteur selon l'une quelconque des revendications 1 à 14, **caractérisé en ce que** la partie cylindrique tubulaire d'extrémité (207) présente une paroi dont l'épaisseur est comprise entre 2 et 20 dixièmes de millimètre.

**16.** Capteur selon l'une quelconque des revendications 4 et 5, **caractérisé en ce que** ledit deuxième tronçon cylindrique (204,205) de section réduite présente un diamètre compris entre 0,5 et 5 mm.

**17.** Capteur selon l'une quelconque des revendications 1 à 16, **caractérisé en ce que** la partie cylindrique tubulaire d'extrémité (207) présente une longueur de 19 mm, un diamètre extérieur $\phi$ext de 8 mm et un diamètre intérieur $\phi$int de 6 mm, et **en ce que** la longueur totale du guide métallique est de l'ordre de 110 mm.

**18.** Capteur selon l'une quelconque des revendications 1 à 17, **caractérisé en ce qu'**il comprend en outre un capteur de température (300) disposé à l'intérieur du boîtier (100) du noyau plongeur (1).

**19.** Capteur selon l'une quelconque des revendications 1 à 18, **caractérisé en ce que**, dans le cas où la partie tubulaire d'extrémité (207) présente un rapport entre l'épaisseur de paroi et le rayon moyen a qui est inférieur à 0,3, la valeur de la fréquence prédéterminée fi, exprimée en Hertz, est choisie en fonction du rayon moyen a, exprimé en mètres, de cette partie tubulaire et de la vitesse $V_T$ des modes transversales dans le matériau de cette partie tubulaire exprimée en m/s, à partir de la formule suivante :

$$fi = \frac{1,7 \times V_T}{2\pi} \times \frac{1}{a}$$

**Claims**

**1.** A sensor for sensing the level of a liquid by means of a plunger core, the sensor comprising a plunger core (1) provided with means for detecting the presence of a liquid and a graduated tape or cable (2) windable onto a support (4) disposed outside the receptacle containing the liquid whose level is to be detected, the free end of the tape or cable being secured to the housing (100) of the plunger core (1), which housing (100) incorporates a self-contained electrical power supply (104), electronic processing circuits (105), and a probe (200) for detecting the presence of a liquid,

the sensor being **characterised in that** the probe (200) for detecting the presence of a liquid comprises a metal waveguide having, in succession: a solid cylindrical top first portion (202); a second portion (203, 204, 205) of smaller section constituting a mechanical amplifier; a frustoconical third portion (206) whose larger base is at its bottom end; and a cylindrical bottom end fourth portion (207) constituting the sensitive portion of the probe; **in that** the metal waveguide is connected to the housing (100) of the plunger core (1) in sealed manner by means of a supporting flange (210) which is fixed on the metal waveguide in a linear annular zone (209) situated level with said frustoconical third portion (206) in such a manner that only the part of the waveguide situated beneath said linear annular zone emerges from the housing (100) of the plunger core (1) and is capable of coming into contact with a liquid; **in that** a transducer (201) electrically powered by the electronic processing circuits (105) is disposed at the free end of the top first portion (202); and **in that** the electronic processing circuits comprise circuits for producing (151) excitation pulses of determined frequency fi that are applied periodically to the transducer (201) to create incident elastic waves in the waveguide, and circuits (153, 154) for detecting pulses delivered by the transducer (201) as echoes of the incident elastic waves in the absence of liquid making contact with the sensitive cylindrical end portion (207) of the waveguide.

2. A sensor according to claim 1, **characterised in that** the cylindrical end portion (207) of the waveguide is made in tubular form and has a free end that is closed by a plug (208) preventing liquid penetrating into said cylindrical end portion (207).

3. A sensor according to claim 1 or 2, **characterised in that** the support flange (210) is fixed on the metal waveguide in a linear annular zone (209) by laser welding or by electron beam welding.

4. A sensor according to any one of claims 1 to 3, **characterised in that** the smaller section second portion constituting a mechanical amplifier comprises a solid elongate frustoconical first length (203) whose larger base is connected to said solid cylindrical top first portion (202) and a cylindrical second length (204, 205) of smaller diameter connected to the smaller base of the frustoconical third portion (206).

5. A sensor according to claim 4, **characterised in that** the cylindrical second length (204, 205) of smaller diameter comprises a first part (204) integrally formed with the solid top first portion (202) and with the elongate frustoconical first length (203), and a second part (205) which is integrally formed with the frustoconical third portion (206) and the bottom cylindrical end portion (207).

6. A sensor according to any one of claims 1 to 5, **characterised in that** the support flange (210) of the metal waveguide is tubular and includes an outside groove (211) in which an O-ring is received.

7. A sensor according to any one of claims 1 to 6, **characterised in that** the solid cylindrical top first portion (202) and the cylindrical bottom end fourth portion (207) have the same outside diameter.

8. A sensor according to any one of claims 1 to 7, **characterised in that** the metal waveguide is made of stainless steel.

9. A sensor according to any one of claims 1 to 8, **characterised in that** the value of the predetermined frequency fi expressed in Hertz is selected as a function of the outside diameter $\phi$ext and of the inside diameter $\phi$int expressed in meters of the cylindrical tubular bottom end portion (207), and as a function of the velocity $V_T$ of transverse waves in the material expressed in m/s, on the basis of the following equation:

$$fi = V_T \times \frac{\phi ext - 0.6\ \phi int}{(\phi ext)^2}$$

10. A sensor according to any one of claims 1 to 9, **characterised in that** the predetermined frequency fi lies in the range about 100 kHz to about 600 kHz.

11. A sensor according to any one of claims 1 to 10, **characterised in that** the total length of the metal waveguide lies in the range 60 mm to 120 mm.

12. A sensor according to any one of claims 1 to 11, **characterised in that** the length of the cylindrical tubular end portion (207) lies in the range 5 mm to 30 mm.

13. A sensor according to any one of claims 1 to 12, **characterised in that** the outside diameter $\phi$ext of the cylindrical tubular end portion (207) lies in the range 5 mm to 15 mm.

14. A sensor according to any one of claims 1 to 13, **characterised in that** the inside diameter $\phi$int of the cylindrical tubular end portion (207) lies in the range 2 mm to 12 mm.

15. A sensor according to any one of claims 1 to 14, **characterised in that** the cylindrical tubular end portion (207) has a wall whose thickness lies in the range two-tenths of a millimeter to twenty-tenths of a millimeter.

16. A sensor according to claim 4 or 5, **characterised in that** said cylindrical second length (204, 205) of smaller section has a diameter lying in the range 0.5 mm to 5 mm.

17. A sensor according to any one of claims 1 to 16, **characterised in that** the cylindrical tubular end portion (207) has a length of 19 mm, an outside diameter $\phi$ext of 8 mm, and an inside diameter $\phi$int of 6 mm, and **in that** the total length of the metal waveguide is about 110 mm.

18. A sensor according to any one of claims 1 to 17, **characterised in that** it further includes a temperature sensor (300) disposed inside the housing (100) of the plunger core (1).

19. A sensor according to any one of claims 1 to 18, **characterised in that** in the event that the tubular end portion (207) has a ratio of wall thickness to mean radius a of less than 0.3, the value of the predetermined frequency fi expressed in Hz is selected as a function of the mean radius $\underline{a}$, expressed in meters, of said tubular portion, and of the velocity $V_T$ of transverse modes in the material of said tubular portion expressed in m/s, on the basis of the following equation:

$$fi = \frac{1.7 \times V_T}{2\pi} \times \frac{1}{a}$$

**Patentansprüche**

1. Flüssigkeits-Füllstandaufnehmer mit Tauchkern, umfassend einen Tauchkern (1), ausgestattet mit Mitteln zum Erkennen des Vorhandenseins der Flüssigkeit und einem mit einer Skala versehenen Kabel oder Band (2), welches auf einen Träger (4) außerhalb des Behälters für die Flüssigkeit, deren Füllstand festzustellen ist, aufwickelbar ist, und dessen freies Ende an dem Gehäuse (100) des Tauchkerns (1) befestigt ist, wobei das Gehäuse (100) eine elektrische autonome Spannungsquelle (104), elektronische Verarbeitungsschaltungen (105) und eine Sonde (200) für das Nachweisen des Vorhandenseins der Flüssigkeit beinhaltet, **dadurch gekennzeichnet, dass** die Sonde (200) für das Nachweisen des Vorhandenseins der Flüssigkeit einen metallischen Wellenleiter aufweist, der aufeinander folgend umfasst: einen ersten oberen, massiven zylindrischen Teil (202), einen zweiten Teil (203, 204, 205) verkleinerten Querschnitts, der einen mechanischen Verstärker bildet, einen dritten, kegelstumpfförmigen Teil (206), dessen große Basis nach unten gewandt ist, und einen vierten unteren zylindrischen Endteil (207), der den empfindlichen Abschnitt der Sonde bildet, dass der metallische Wellenleiter mit dem Gehäuse (100) des Tauchkerns (1) über einen Träger-Bundring (210) abgedichtet verbunden ist, der an dem metallischen Wellenleiter in einer linearen Ringzone fixiert ist, die sich auf der Höhe des dritten, kegelstumpfförmigen Teils (206) befindet, derart, dass nur der Abschnitt des Wellenleiters, der sich unterhalb der linearen Ringzone befindet, aus dem Gehäuse (100) des Tauchkerns (1) vorsteht und in Berührung mit einer Flüssigkeit treten kann, dass ein Wandler (201), der von den elektrischen Verarbeitungsschaltungen (105) mit elektrischer Energie gespeist wird, sich an dem freien Ende des ersten oberen Teils (202) befindet, und dass die elektronischen Verarbeitungsschaltungen Schaltungen (151) für die Erzeugung von Anregungsimpulsen einer vorbestimmten Frequenz fi enthalten, welche periodisch an den Wandler (201) gelegt werden, um elastische Wellen zu erzeugen, die in den Wellenleiter eintreten, und Schaltungen (153, 154) enthalten zum Erfassen von durch den Wandler (201) abgegebenen Impulsen als Echo auftreffender elastischer Wellen bei Fehlen einer Flüssigkeit in Berührung mit dem empfindlichen zylindrischen Endteil (207) des Wellenleiters.

2. Aufnehmer nach Anspruch 1, **dadurch gekennzeichnet, dass** der zylindrische Endteil (207) des Wellenleiters die Form eines Rohrs hat und ein freies Ende besitzt, welches von einem Stopfen (208) verschlossen ist, der das Eindringen von Flüssigkeit in das Innere des zylindrischen Endteils (207) verhindert.

3. Aufnehmer nach Anspruch 1 oder 2, **dadurch gekennzeichnet, dass** der Träger-Ringbund (210) an dem metallischen Wellenleiter in einer linearen Ringzone (209) durch Laserschweißen oder durch Elektronenstrahlschweißen fixiert ist.

4. Aufnehmer nach einem der Ansprüche 1 bis 3, **dadurch gekennzeichnet, dass** der zweite Teil verkleinerten Querschnitts, der einen mechanischen Verstärker bildet, einen ersten länglichen, massiven Kegelstumpf (203) aufweist, dessen große Basis mit dem ersten oberen zylindrischen massiven Teil (202) verbunden ist, und einem zweiten zylindrischen Längenabschnitt (204, 205) verkleinerten Querschnitts aufweist, der an die kleine Basis des dritten kegelstumpfförmigen Teils (206) anschließt.

5. Aufnehmer nach Anspruch 4,

**dadurch gekennzeichnet, dass** der zweite zylindrische Abschnitt (204, 205) verkleinerten Querschnitts einen ersten Abschnitt (204) aufweist, der einstückig mit dem ersten oberen massiven Abschnitt (202) und dem ersten länglichen kegelstumpfförmigen Abschnitt (203) ausgebildet ist, und einen zweiten Abschnitt (205) aufweist, der einstückig mit dem dritten kegelstumpfförmigen Teil (206) und dem unteren zylindrischen Endteil (207) ausgebildet ist.

6. Aufnehmer nach einem der Ansprüche 1 bis 5, **dadurch gekennzeichnet, dass** der Träger-Ringbund (210) für den metallischen Wellenreiter rohrförmig ist und eine Außennut (211) aufweist, in der ein O-Ring aufgenommen ist.

7. Aufnehmer nach einem der Ansprüche 1 bis 6, **dadurch gekennzeichnet, dass** der erste obere, zylindrische und massive Teil (202) und der vierte untere zylindrische Endteil (207) den gleichen Außendurchmesser aufweisen.

8. Aufnehmer nach einem der Ansprüche 1 bis 7, **dadurch gekennzeichnet, dass** der metallische Wellenleiter aus Edelstahl besteht.

9. Aufnehmer nach einem der Ansprüche 1 bis 8, **dadurch gekennzeichnet, dass** der Betrag der vorbestimmten Frequenz fi, ausgedrückt in Hertz, in Abhängigkeit des Außendurchmessers $\phi$ext und des Innendurchmessers $\phi$int, angegeben jeweils in Metern, des unteren zylindrischen rohrförmigen Endteils (207) und der Geschwindigkeit $V_T$ der Transversalwellen in dem Material, ausgedrückt in m/s, gemäß folgender Formel gewählt wird:

$$fi = V_T \times \frac{\phi ext - 0,6 \, \phi int}{(\phi ext)^2}$$

10. Aufnehmer nach einem der Ansprüche 1 bis 9, **dadurch gekennzeichnet, dass** die vorbestimmte Frequenz fi zwischen etwa 100 kHz und 600 kHz liegt.

11. Aufnehmer nach einem der Ansprüche 1 bis 10, **dadurch gekennzeichnet, dass** die Gesamtlänge des metallischen Wellenleiters zwischen 60 und 120 mm liegt.

12. Aufnehmer nach einem der Ansprüche 1 bis 11, **dadurch gekennzeichnet, dass** die Länge des rohrförmigen zylindrischen Endteils (207) zwischen 5 und 30 mm liegt.

13. Aufnehmer nach einem der Ansprüche 1 bis 12, **dadurch gekennzeichnet, dass** der Außendurchmesser $\phi$ext des zylindrischen rohrförmigen Endteils (207) zwischen 5 und 15 mm liegt.

14. Aufnehmer nach einem der Ansprüche 1 bis 13, **dadurch gekennzeichnet, dass** der Innendurchmesser $\phi$int des zylindrischen rohrförmigen Endteils (207) zwischen 2 und 12 mm liegt.

15. Aufnehmer nach einem der Ansprüche 1 bis 14, **dadurch gekennzeichnet, dass** der zylindrische rohrförmige Endteil (207) eine Wand aufweist, deren Dicke zwischen 2 und 20 Zehntel Millimeter liegt.

16. Aufnehmer nach einem der Ansprüche 4 und 5, **dadurch gekennzeichnet, dass** der zweite zylindrische Abschnitt (204, 205) mit verringertem Querschnitt einen Durchmesser zwischen 0,5 und 5 mm aufweist.

17. Aufnehmer nach einem der Ansprüche 1 bis 16, **dadurch gekennzeichnet, dass** der zylindrische rohrförmige Endteil (207) eine Länge von 19 mm, einen Außendurchmesser $\phi$ext von 8 mm und einen Innendurchmesser $\phi$int von 6 mm besitzt, und dass die Gesamtlänge des metallischen Wellenleiters etwa 110 mm beträgt.

18. Aufnehmer nach einem der Ansprüche 1 bis 17, **dadurch gekennzeichnet, dass** er außerdem einen Temperaturmesser (300) besitzt, der sich im Inneren des Gehäuses (100) des Tauchkerns (1) befindet.

19. Aufnehmer nach einem der Ansprüche 1 bis 18, **dadurch gekennzeichnet, dass** dann, wenn der rohrförmige Endteil (207) ein Verhältnis zwischen der Wanddicke und dem mittleren Radius von weniger als 0,3 aufweist, der Wert der vorbestimmten Frequenz fi, ausgedrückt in Hertz, abhängig von dem mittleren Radius a, ausgedrückt in Metern, dieses rohrförmigen Teils, und der Geschwindigkeit $V_T$ von Transversalmoden in dem Material dieses rohrförmigen Teils, ausgedrückt in m/s, an Hand folgender Formel gewählt wird:

$$fi = \frac{1,7 \times V_T}{2\pi} \times \frac{1}{a}$$

# FIG.1

# FIG.2

FIG.3

FIG.4

FIG.6

FIG.5